# EUROPEAN PATENT SPECIFICATION

(11) **EP 0 590 906 B1**
(45) Date of publication and mention of the grant of the patent: **15.04.1998**
(21) Application number: 93307629.1
(22) Date of filing: 27.09.1993
(51) Int. Cl.: B29D 30/48

(54) **Method and apparatus for automatically assembling a tyre bead apex**
Verfahren und Vorrichtung zum automatischen Aufbauen von Wulstfüllern für Reifen
Procédé et dispositif pour assembler automatiquement les bandes de remplissage des tringles de pneus

(30) Priority: 29.09.1992 JP 260121/92
(43) Date of publication of application: 06.04.1994
(73) Proprietor: SUMITOMO RUBBER INDUSTRIES LIMITED, Kobe-shi, Hyogo-ken (JP)
(72) Inventor: Kikuchi, Nobuyuki, Shirakawa-shi, Fukushima (JP); Onuki, Masatsugu, Nishi-Shirakawa-gun, Fukushima (JP); Ookochi, Katsuaki, Shirakawa-shi, Fukushima (JP); Yarimizu, Kasuaki, Shirakawa-shi, Fukushima (JP)
(74) Representative: Stewart, Charles Geoffrey

(56) References cited:
- EP-A- 0 310 417
- EP-A- 0 429 213
- DE-B- 1 180 515
- FR-A- 2 387 116
- US-A- 3 895 986
- US-A- 5 080 738
- PATENT ABSTRACTS OF JAPAN vol. 7, no. 237 (M-250)(1382) 21 October 1983 & JP-A-58 126 139 (YOKOHAMA GOMU K. K.)

## Description

The present invention relates to a method of and an apparatus for automatically assembling a bead apex suitable for manufacture of a pneumatic tyre for an automobile.

In prior art relating to the method of and apparatus for automatically assembling a bead apex of this type, there have been proposed techniques, for example, described in examiner Japanese Patent Publications SHO 51-29551 and SHO 61-6782, and Unexamined Japanese Patent Publication HEI 2-145328.

In the prior art described above, a rubber layer called an apex, which is extruded approximately in an isosceles triangular shape having one short side and two long sides, is formed as an annular ring around the outer peripheral surface of a bead ring or core by raising the apex and winding it with the bottom side of the isosceles triangle around the outer peripheral surface of the bead ring so as to be pressed together.

However, when the continuous length of strip apex is cut to the specified length for winding both ends are cut perpendicular to the longitudinal direction and when wound around the outer peripheral surface of the bead ring this creates a V-shaped gap between the two end portions of the apex. In the prior art described above, to eliminate the V-shaped gap, the annular apex is forcibly pulled in the circumferential direction. This causes the disadvantage that the deformation and the residual stress of the apex is uneven in the circumferential direction.

The circumferential unevenness of the deformation and the residual stress in the apex exerts an adverse effect on the tyre main body incorporating the apex resulting in a deterioration of tyre uniformity.

Further, in the prior art described above, ,when the apex is wound around the outer periphery of the bead ring, a process for pulling the apex for eliminating the V-shaped gap must be performed which interrupts the winding process. The increased number of process steps and thus operating time, makes difficulty the timing control for each process, and results in reduced productivity.

In addition, in the prior art described above, since the end portions of the apex must be clamped to eliminate the V-shaped apex, a clamp unit is required, which complicates the construction of the apparatus, thus causing the disadvantage of increasing the cost of the apparatus.

A method and apparatus for automatically assembling a bead apex in which a strip apex is formed firstly into a cylindrical body which is subsequently formed into dish-like shape according to the preamble of claims 1 and 5 respectively are known, for example from US-A-3895986.

It is an object of the present invention to make uniform the deformation and residual stress of an apex in the circumferential direction, and to simplify the construction of the apparatus.

According to a first aspect of the present invention, there is provided a method of automatically assembling a bead apex comprising forming a strip apex having a triangular section with one short side and two long sides and a specified length between leading and rear longitudinal ends into a cylindrical body such that the said long sides are the inner and outer peripheral surfaces respectively, and joining both the longitudinal ends of the said strip apex, forming said cylindrical body into a disk-like shape such that said short side becomes the inner peripheral surface and said long sides become the axial end surfaces, and joining the inner peripheral surface of said disk-like apex to the outer peripheral surface of a bead ring, characterised by at the start of forming the cylindrical body sticking needles into the leading end of the strip apex by use of a disk roller pressing the strip apex onto said needles so as to firmly grip the strip apex.

A second aspect of the present provides an apparatus for automatically assembling a bead apex comprising a cylindrical body formation means for forming a strip apex having a triangular section with one short side and two long sides and a specified length between leading and rear longitudinal ends into a cylindrical body such that said long sides become the inner and outer peripheral surfaces, and a means for joining both longitudinal ends of the strip apex, a means for forming said cylindrical body into a disk-like shape such that said short side becomes the inner peripheral surface and said long sides become the axial end surfaces, and a means for joining the inner peripheral surface of said disk-like apex to the outer peripheral surface of a bead ring, characterised in that the cylindrical body formation means includes at one circumferential position needles which project radially outwardly of the cylindrical outer peripheral surface for sticking the leading end of said apex.

According to the present invention, the strip apex is wound around the cylindrical outer peripheral surface of a cylindrical body formation unit and both the end portions of the strip apex are jointed to each other, to thus form the endless cylindrical body. Consequently, both the end portions are perfectly joined, and a V-shaped gap is never generated as in the prior art described above. In the present invention, therefore, there is not required the process of clamping and forcibly pulling the end portions of the apex for eliminating the V-shaped gap as in the prior art.

The cylindrical body is formed in the disk shape by raising the cylindrical outer peripheral surface radially outwardly by use of the disk formation unit. When the cylindrical body is thus formed into the disk shape, the deforming force is uniformly applied to the interior of the apex, and accordingly, uneven residual stress is not generated.

Further, by disposition of the bead ring on the side of the disk formation unit when the cylindrical body is formed into the disk shape, the inner peripheral surface of the strip apex is press-contacted with the outer peripheral surface of the bead ring, so that the apex and the bead ring are integrally joined to each other.

Accordingly, the present invention makes it possible to form the apex into a perfect annular body without the process of clamping and pulling both end portions of the apex to eliminate the V-shaped gap as in the prior art.

Some embodiments of the present invention will now be described with reference to the accompanying drawings in which:
Figure 1 is a perspective view of an automatic bead apex assembling apparatus;
Figure 2 is a perspective view of an apex strip;
Figure 3 is a front view of a reforming unit;
Figure 4 is a side view of a reforming unit;
Figure 5 is a plan view of a positioning unit;
Figure 6 is a front view of a positioning unit;
Figure 7 is a front view of a former for an annulus formation apparatus;
Figure 8 is a sectional view of a former; and
Figure 9 is an enlarged view of a needle of the former.

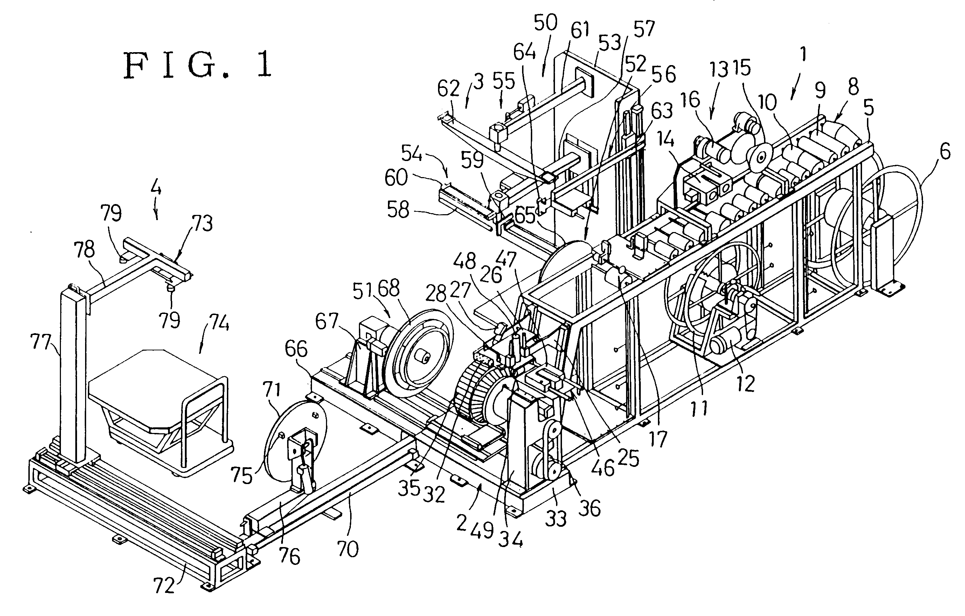

The bead apex automatic assembling apparatus of Figure 1 comprises an apex supply apparatus 1 for supplying strip apex material in the longitudinal direction; an annulus formation apparatus 2 for forming the apex material into a cylindrical body and then forming it to a disk-like shape; a bead ring supply apparatus 3 for supplying a bead ring at the side of the annulus formation apparatus 2; and a carrying-out apparatus 4 for carrying out the finished product obtained by integrally joining the disk-like apex to the outer periphery of a bead ring.

The apex supply apparatus 1 has a main body frame 5 fixed to a floor. A material supply reel 6 is removably and rotatably mounted at one end portion of the main body frame 5. Strip apex material is wound upon this reel 6.

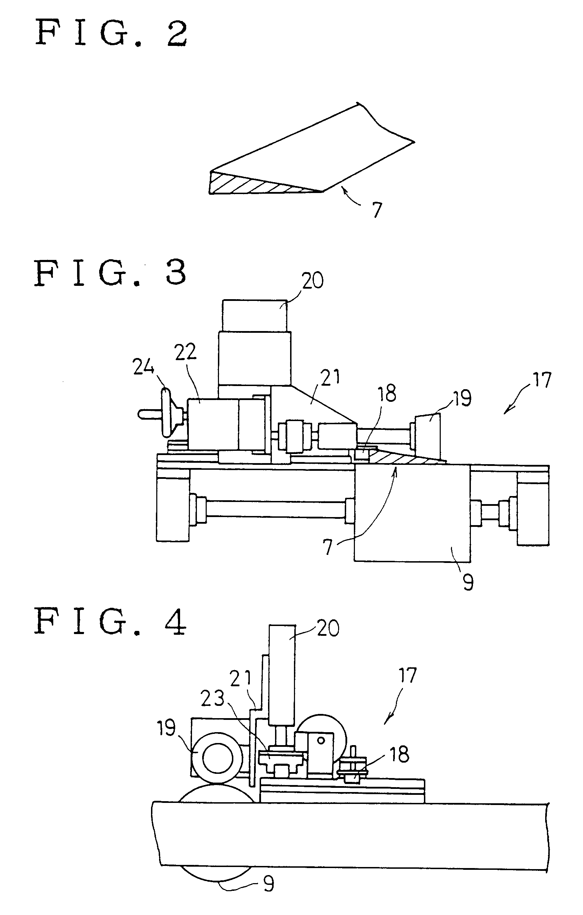

As shown in Figure 2, the apex 7 is a strip-like body obtained by continuously extruding rubber material. The sectional shape of the apex 7, perpendicular to its longitudinal axis, is approximately an isosceles triangle with one short side and two long sides. Namely, the strip apex 7 is formed such that one end portion in the width direction is thick and the thickness is gradually decreased towards the other end portion. The strip apex 7 is wound around the reel 6 in a rolled shape such that the long sides of the triangular section are the inner and outer peripheral surfaces. In this embodiment, two strip apexes 7 are symmetrically wound together with a poly line (not shown) on a single reel 6.

A roll conveyor unit 8 for conveying the strip apex 7 unwound from the reel 6 in the longitudinal direction is provided on the upper portion of the main body frame 5 with its conveying surface set approximately in the horizontal direction. The conveyor unit 8 is constituted of a plurality of conveying rollers 9 juxtaposed in the conveying direction. The conveying rollers 9 provided on the upstream side have a length such that two strip apexes 7 wound around the reel 6 can be simultaneously conveyed whereas those downstream have a length such that one strip apex 7 can be conveyed.

A cutter 10 is disposed at the boundary between the conveying rollers 9 having the length to permit two apexes 7 to be conveyed parallel to each other and the carrying rollers 9 having the length to permit only one apex 7 to be conveyed. The cutter 10 is to cut the poly liner at the position between the right and left strip apexes 7.

A reel 11 for winding up one strip apex 7 together with its part of the liner cut by the cutter 10 is positioned under the roller conveyor unit 8. The winding reel 11 is positively driven by a motor 12. The reel 11 is, after being filled with apex 7 together with its liner, reversed to supply the next length of material.

A liner winding unit 13, separating and taking the other apex cut by the cutter 10 from the supply of strip apex 7 and for winding it, is positioned over the roller conveyor unit 8. The liner winding unit 13 comprises a pair of pull-rolls 14 to hold and pull the liner and a reel 15 for winding the liner. One of the pair of the pull rolls 14 is fixed, and the other is energised by a cylinder drive unit for holding the liner with a specified strength. This pull-roll 14 is positively driven by a motor 16.

The strip apex 7 on the conveying rollers 9 is conveyed in the longitudinal direction by the drive force with which the pull roll 14 pulls the liner.

A reforming unit 17 is provided on the downstream side of the roller conveyor unit 8. The reforming unit 17 is to prevent meandering of the strip apex 7.

Since the strip apex 7 is suppled wound around the reel 6, it has a winding curl. When the strip apex 7 is unwound with the winding curl left as it is, the strip apex 7 is usually made in such a state that the side surface on the thicker and short side is projectingly curved. The reforming unit 17 corrects this winding curl and prevents meandering when the strip is further handled.

The reforming unit 17, as shown in Figures 3 and 4, has a guide member 18 for guiding the side surface on the short side of the strip apex 7 conveyed along the conveying rollers 9. In this embodiment, the guide member 18 is a vertical roller rotatable around the vertical axis.

A tapered roller 19 is disposed over the conveying rollers 9 at a position slightly apart from the guide member 18 on the downstream side in the conveying direction. The axis of the tapered roller 19 is parallel to those of each conveying roller 9. The peripheral surface of the tapered roller 19 is formed so as to abut the upper surface on the thinner side of the strip apex 7 lying on the conveying rollers 9.

The tapered roller 19 is rotatably supported by a liftable bracket 21 vertically moved by a cylinder 20. The tapered roller 19 is driven at a peripheral speed larger than the conveying speed of the strip apex 7. The cylinder 20 is mounted on a slide bracket 23 movable in the lateral direction. The slide bracket 23 is positioned in the lateral direction by a handle 24. Accordingly, by moving the slide bracket 23 in the lateral direction according to the width dimension of the strip apex 7, the tapered roller 19 can be changed in its lateral position. By pressing the upper surface of the strip apex 7 on the conveying roller 9 side by the tapered roller 19, and further, by rotating the tapered roller 19 at a speed higher than the conveying speed, the strip apex 7 is conveyed while its thinner side is bent on the thicker side around the guide member 18, to be thus reformed in the above direction. As a result, the winding curl of the strip apex 7 is corrected and meandering thereof is prevented. The end portion of the main body frame 5 on the downstream side in the conveying direction is formed in a tilting surface tilted on the downstream side as it goes down from the upper portion, and a liftable frame 25 is vertically movably provided on the tilting surface. A delivery conveyor 26 is provided on the liftable frame 25. The delivery conveyor 26 is constituted of a belt conveyor. The strip apex 7 conveyed from the roller conveyor unit 8 is shifted on the conveying surface of the delivery conveyor 26, and is further conveyed on the downstream side.

A cutting unit 27 is provided downstream of the liftable frame 25. The cutting unit 27 has a single edged knife for cutting the strip apex 7 across the whole width direction so as to be perpendicular to the longitudinal direction and to be sloped at 45 degrees in the thickness direction. The knife is movable to cut the strip apex 7 from the thinner side to the thicker side.

In the liftable frame 25, a positioning unit 28 is provided on the downstream side from the cutting unit 27.

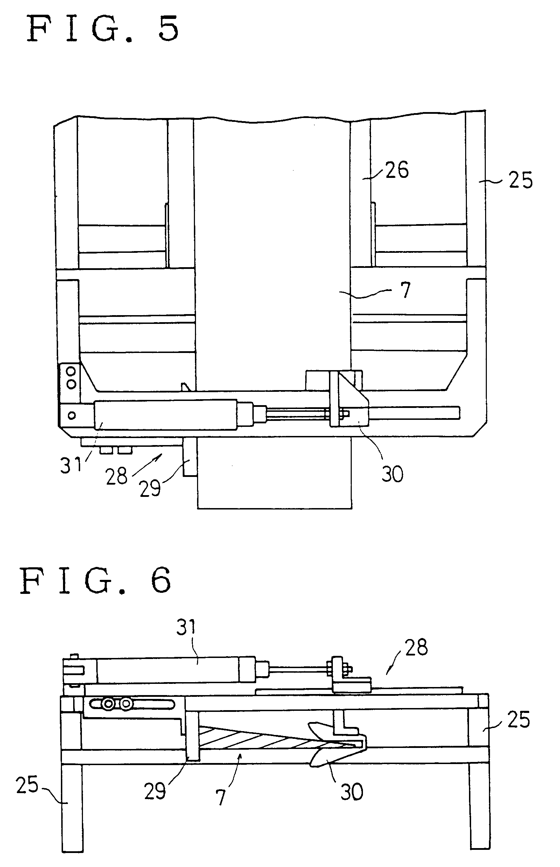

The positioning unit 28, as shown in Figures 5 and 6, has a positioning guide member 29 fixed on one side portion of the liftable frame 25 in the lateral direction so as to be adjusted in its lateral position. The positioning guide member 29 is provided at such a position as to be slidably contacted with the short side surface of the strip apex 7 conveyed from the delivery conveyor 26. Further, the positioning unit 28 has a V-shaped guide member 30 to contact the two long sides at the edge portion of the strip apex 7 on the thinner side. The V-shaped guide member 30 is movable in the lateral direction by a cylinder 31. By pressed the V-shaped guide member 30 on the positioning guide member 29 side by the cylinder 31, the strip apex 7 is pressed to the positioning guide member 29, to ensure the correct positioning of the strip apex 7 on the short side. Further, in the liftable frame 25, a disk roller 32 is disposed on the downstream side from the positioning unit 28 so as to be positioned over the strip apex 7 across the full width of the apex strip. the disk roller 32 is provided on the liftable frame 25 so as to be movable downwardly.

The annulus formation apparatus 2 is disposed under the disk roller 32.

The annulus formation apparatus 2 has a first base 33 fixed on the floor, a stand erected on the base 33, and a former 35 rotatably supported on the stand 34. The former 35 is rotated by a motor 36.

The annulus formation apparatus 2 comprises a cylindrical body formation unit 2a for forming the strip apex 7 into a cylindrical body and a disk formation unit 2b for forming the cylindrical body into a disk. The cylindrical body formation unit 2a and the disk formation unit 2b are incorporated in the former 35.

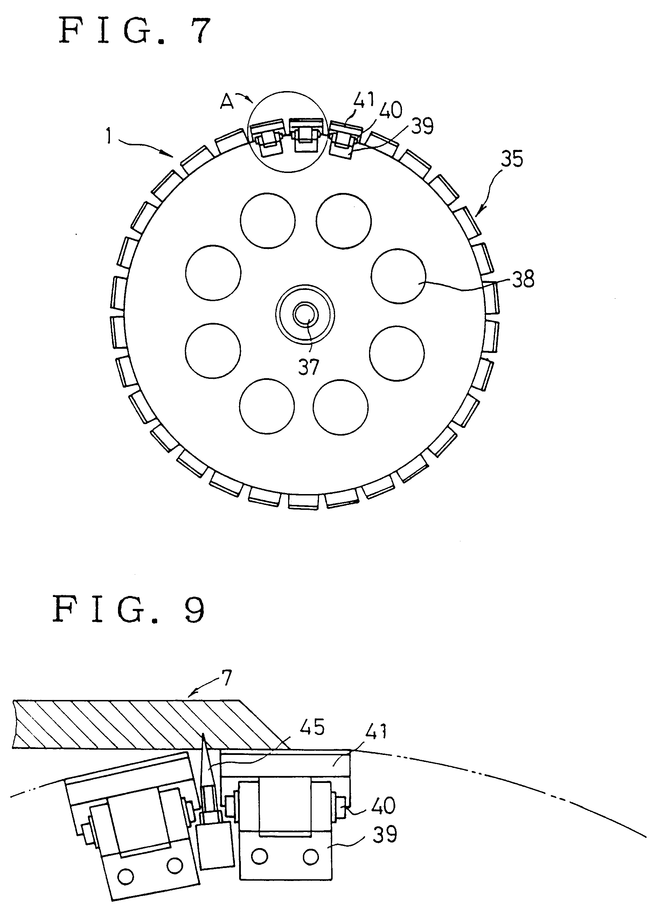

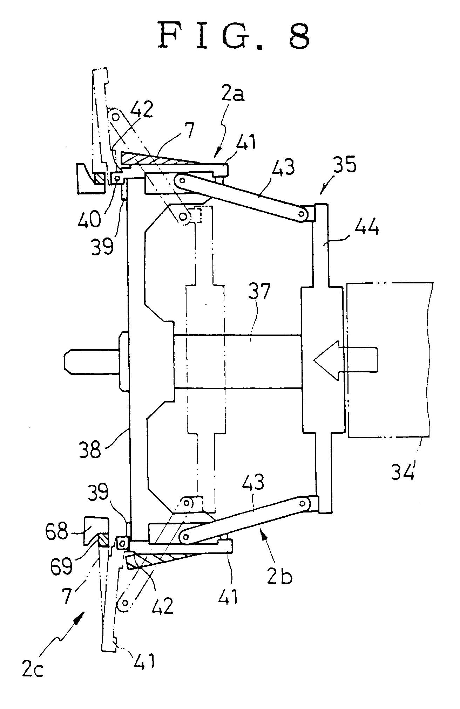

Figures 7 and 8 show the details of the former 35.

The former 35 is turnably supported by the stand 34, and has a rotating shaft 37 driven by the motor 36. The rotating shaft 37 has a laterally horizontal axis parallel to the axis of the unwinding reel 6. A wheel 38 is fixed around the rotating shaft 37. A plurality of brackets 39 are disposed along the end surface of the outer peripheral portion of the wheel 38 so as to be circumferentially spaced apart from each other. A segment 41 is turnably disposed on each bracket 39 through a turning shaft 40. The axis of each turning shaft 40 corresponds to the tangential line of the same circle around the rotating axis of the wheel 38.

The segments 41, having the same shape, are disposed so as to be circumferentially spaced apart from each other. One end portion of each segment 41 is pivotably supported by the turning shaft 40. An escape stepped portion 42 is formed on the outer surface of each segment 41 on the turning shaft side. Each segment 41 can be freely changed in its position between a lower position as shown by the solid line of Figure 8 and the raised position as shown by the virtual line in Figure 8. In the lower position, the outer peripheral surface of each segment 41 forms a cylindrical peripheral surface. To the contrary, in the raised position, it forms an end surface perpendicular to the rotating axis of the wheel 38.

The cylindrical body formation unit 2a comprises the segments 41, the wheel 38 and the like. The disk formation unit 2b comprises a mechanism for turning each segment 41 around the turning shaft 40.

For turning each segment 41 around the turning shaft 40, a link 43 is pivotably supported on the inner surface side of each segment 41. The other end of each link 43 is connected to a slider 44 mounted on the rotating shaft 37. The slider 44 is externally fitted around the rotating shaft 37 so as to be slidable in the rotating axial direction and to be rotatable integrally with the rotating shaft 37 by a drive unit (not shown). By moving the slider 44 in the axial direction, each segment 41 can be changed in its position between the lower position and the raise position through each link 43. Namely, a segment turning unit comprises the links 43, slider 44 and the like.

The former 35 is disposed at such a position that the strip apex 7 supplied from the delivery conveyor 26 can be wound around the outer peripheral surfaces of the segments 41 in its lying down posture. Namely, the former 35 is disposed such that the short side surface of the strip apex 7 laterally positioned by the positioning guide member 29 and supplied from the delivery conveyor 26 is positioned in the vicinity of the turning shafts 40. When the strip apex 7 is wound around the segments 41, the thicker portions of the strip apex 7 faces the escape stepped portions 42.

As shown in Figure 9, the former 35 is provided with needles 45 which project from the outer peripheral surfaces of the segments 41 when the segments 41 are in the lying down position. A plurality of needles 45 is provided throughout the whole length of the strip apex 7 in the width direction. These needles 45 are provided so as to project between the segments 41 and are provided at one circumferential position of the wheel 38. These needles 45 are intended to be stuck to the end portion of the strip apex 7 supplied from the delivery conveyor 26 to fix the strip apex 7 on the outer peripheral surface of the former 35.

As shown in Figure 1, a joint unit 46 is provided on the upper surface of the stand 34 of the annulus formation apparatus 2. The joint unit 46 is to pressure-weld the end portions of the strip apex wound around the outer peripheral surface of the former 35 to each other and hence to form an endless annular body.

For this the joint unit 46 has a transversely moving unit 47 fixed on the upper surface of the stand 34, a vertically moving unit 48 laterally movable by the transversely moving unit 47, and a joint roller 49 vertically movable by the vertically moving unit 48. By moving the joint roller 49 laterally and vertically (radially of the former), the end portions of the strip apex 7 wound around the outer peripheral surface of the former 35 are pressure-welded to each other radially inwardly of the strip apex 7, so that the end portions of the apex 7 are joined to each other. As shown in Figure 1, the bead ring supply apparatus 3 is disposed on one lateral side of the apex supply apparatus 1 and the annulus formation apparatus 2.

The bead ring supply apparatus 3 comprises a bead ring stock unit 50 for holding a plurality of bead rings, a bead ring clamp unit 51 for holding one bead ring on the side of the annulus formation apparatus 2, and a transfer unit 52 for conveying the bead ring from the stock unit 50 to the clamp unit 51.

The bead ring stock unit 50 has a column 53 fixedly erected on the side of the main body frame 5, a first hanger unit 54 for hanging bead rings on the column 53 together with spacers, a second hanger 55 disposed over the first hanger unit 54 for hanging only the spacer, and a spacer removing unit 56 for removing the spacer on the first hanger unit 54 and moving it to the second hanger unit 55.

The bead rings are each formed of a metal ring covered with uncured rubber. A spacer is interposed between successive bead rings such that the rubber layers of the plurality of bead rings are prevented from being stuck to each other when the bead rings are concentrically overlapped.

The first hanger unit 54 has a vertically movable first arm 57 provided on the column 53 so as to project from the column 53 on the downstream side (in the downstream conveying direction), and a first hanger 58 is moulded on the leading edge of the arm 57 so as to be rotatable in the horizontal plane. A pair of right and left pushers 59 moved outwardly from the lateral centre portions are provided on the hanger 58. A stopper 60 is fixed on the outer end portion of the hanger 58.

The second hanger unit 55 has a second arm 61 fixed on the column 53, and a second hanger 62 is provided at the leading edge of the arm 61 so as to be rotatable in the horizontal plane. The second arm 61 and its hanger 62 are disposed parallel to the first arm 57 and hanger 58, respectively.

The spacer removing unit 56 has a vertically movable third arm 63 mounted on the column 53, and a laterally movable attracting unit 64 provided at the leading edge of the arm 63. The attracting unit 64 comprises a vacuum pad, and is set so as to face the end portions of the first and second hangers 58 and 62.

A plurality of bead rings separated by spacers is hung from the first hanger 58. The bead rings and the spacers are pushed outwardly by the pushers 59, and the spacer or bead ring positioned at the outermost end portion is located by the stopper 60. If a spacer is positioned at the outermost end portion, the third arm 63 of the spacer taking-out unit 56 is lowered, and the attracting unit 64 faces the spacer. The attracting unit 64 laterally advances, and the vacuum pad contacts the spacer for vacuum attraction. After that, the attracting unit 64 is moved back laterally and the third arm 63 is raised up to the position of the second hanger unit 55, and thus moves to hang the spacer from the second hanger 62. The attracting unit 64 then returns to its stand-by position.

On the first hanger 58, since the spacer has been removed, the next bead ring is position at the outermost end.

The transfer unit 52 has a disk-like first attracting plate 65, and a magnet for attracting the bead ring embedded in the end surface of the attracting plate 65. The attracting plate 65 is mounted so it can freely reciprocate between the end portion of the first hanger 58 and the clamp unit 51 and to be laterally movable.

The attracting plate 65 advances from the position of the first hanger 58 and contacts and attracts the bead ring hung at the outermost end portion of the first hanger 58. After the first hanger 58 8is slightly lowered, the attracting plate 65 is taken backwards and then moved up to the position of the clamp unit 51.

The clamp unit 51 has a second base 66 provided on the first base 33 of the annulus formation apparatus 2 so as to be laterally adjacent thereto, a laterally movable tail stock 67 provided on the second base 66, and a bead clamper 68 supported by the tail stock 67.

The bead clamper 68 has a construction wherein annularly disposed segments may be extended and contracted in the radial direction. The centre of the bead clamper 68 corresponds to that of the former 35 of the annulus formation apparatus 2. The bead clamper 68 is movable to the side surface position of the wheel 38 of the former 35.

The bead ring, which is held by the attracting plate 65 of the transfer unit 52 and is moved to the position of the clamp unit 51, is concentrically positioned to face the bead clamper 68. Thus, as the attracting plate 65 advances, the segments of the bead clamper 68 are positioned close to the inner peripheral surface of the bead ring. then, the segment assembly is increased in diameter to hold the inner peripheral surface of the bead ring. After that, the attracting plate 65 is returned to its original position and waits for the next bead in a stand-by condition.

The bead clamper 68 and bead ring are moved in the vicinity of the end surface of the wheel 38 of the former 35 of the annulus formation apparatus 2 by laterally advancement of the tail stock 67 (see Figure 8).

As shown in Figure 8, when the segments 41 of the former 35 are raised with respect to the bead ring 69 held by the bead clamper 68, the annular apex 7 wound around the outer peripheral surfaces of the segments 41 is radially raised such that the short side becomes the inner peripheral surface, and the inner peripheral surface of the short side is fixedly fitted around the outer peripheral surface of the bead ring 69. In this the escape stepped portions 42 provided on the end portions of the segments 41 generate a force to push the apex 7 towards the centre of the former 35.

As is apparent from the above description, a joining unit 2c for integrally joining the bead ring 69 to the apex 7 is comprised of the disk formation unit 2b and the clamp unit 51.

As the apex y is pressed into contact with the outer periphery of the bead ring 69, the segments 41 of the former 35 are returned into their lower or retracted state, and the tail stock 67 is moved away. A bead ring 69 with the apex hereinafter referred to as the finished bead) held by the bead clamper 68 is then removed by the removal apparatus 4.

As shown in Figure 1, the removal apparatus 4 has first rails 70 extending downstream from the vicinity of the joining portion between the first and second bases 33 and 66, a second attracting plate 71 movably provided on the first rails 70, second rails 72 laid perpendicular at the end of the first rails 70, a chuck unit 73 laterally movably provided on the second rails 72, and a bead mounting carrier 74 movable on the floor.

The second attracting plate 71 is formed in a disk-like shape, and has a magnet to attract the finished bead 69 embedded in its end surface, and a pair of pins 75 to engage the inner peripheral surface of the finished bead 69. The second attracting plate 71 is mounted on a saddle 76 movable on the first rails 70 such that the end surface can be changed in position between the vertical and horizontal states.

The chuck unit 73 has a laterally movable column 77 provided on the second rails 72, a vertically movable chuck arm 78 provided on the column 77, and a pair of chucks 79 provided on the chuck arm 78 so as to be movable close to or apart from each other in the lateral direction.

In the removal apparatus 4, the second attracting plate 71 is moved to the position where it faces to the finished bead 69 held by the bead clamper 68 while the end surface thereof is vertical, and the segments of the bead clamper 68 are reduced in diameter to release. Thus, the finished bead 69 is attracted and held by the attracting plate 71. At this time, since the inner surface of the finished bead 69 is held by the pins 75, the finished bead 69 is prevented from being accidentally dropped. Subsequently, the second attracting plate 71 is moved to the second rail 72 side, and the end surface of the attracting plate 71 is tilted to horizontal to hold the finished bead 69 thereon.

The column 77 of the chuck unit 73 is then moved to the position of the second attracting plate 71, and the chuck arm 78 is lowered so that the pair of right and left chucks 79 are positioned at the inner peripheral surface of the finished bead 69. After that, the chuck 79 is opened, to hold the inner peripheral surface of the finished bead 69. The chuck 79 is raised, moving upwardly of the bead mounting carrier 74, and drops the finished bead 69 on to the carrier 74. A spacer is then put on the upper surface of the finished bead 69, and the next finished bead 69 will be positioned on the spacer.

According to the bead apex automatically assembling apparatus having the above construction, the strip apex 7 wound around the unwinding reel 6 is conveyed along a roller table unit 8 on the downstream side by pulling of the liner thereof. During conveying, the winding curl is corrected by the reforming unit 17 to prevent meandering.

When the leading edge of the strip apex 7 reaches the leading edge of the delivery conveyor 26, the leading edge of the apex 7 is cut by the cutting unit 27 so as to be perpendicular to the longitudinal direction and at an angle of 45 degrees to the thickness direction.

The strip apex 7 is positioned in the width direction by the positioning unit 28, and is passed on to the outer peripheral surface of the former 35 of the annulus formation apparatus 2. At this time, the segments 41 of the former 35 are in their lower or falling-down position to form a cylindrical outer peripheral surface. The former 35 is in the stand-by position where the leading edge of the strip apex 7 is stuck to it by the needles 45 projecting from the outer peripheral surface of the former 35.

The frame 25 is lowered, and the leading edge of the strip apex 7 is shifted on to the needles 45 of the former 35. Subsequently, the disk roller 32 is lowered to press the strip apex 7, so that the needles 45 are firmly stuck into the strip apex 7. The disk roller 32 functions as a final guide to allow the strip apex 7 to certainly follow the edges of the segments 41.

The pressing of the V-shaped member 30 of the positioning unit 28 is released, and the former 35 begins to rotate. The rotation is increased from the low speed, then reduced in the positioning state measured by a sensor (not shown), and is stopped when it reaches the position of the specified length for the strip, i.e. the apex for the bead.

The pressing step by the V-shaped member 30 is then performed, and the rear end portion of the strip apex 7 is cut by the cutting unit 27. After that, the pressing of the V-shaped member 30 is released, and the former 35 is again rotated. This rotation of the former 35 is stopped when the front and rear end portions of the strip apex 7 reach the centre of the disk roller 32.

The disk roller 32 is raised and the liftable frame 25 is raised, and further, the knife of the cutting unit 27 is returned to its original point.

The joint roller 49 advances and is lowered, to press the joint portions at the front and rear end portions of the strip apex 7. The joint roller 49 is moved from the thicker side to the thinner side, so that the cut end portions of the front and rear end portions of the strip apex 7 are joined to each other. Thus, the strip apex 7 is formed to a cylindrical shape.

At the same time as the above operation, in the bead ring supply apparatus 3, the bead ring 69 is supplied from the bead ring stock unit 50 to the bead ring camp unit 51 by the transfer unit 52, and is clamped by the bead ring clamp unit 51. Thus, the bead ring 69 is disposed at the position as shown in Figure 8.

After that, by the segment turning unit, the segments 41 of the former 35 are raised around the turning shafts 40. By the raising of the segments 41, the apex 7 wound around the outer peripheral surface of the segments 41 is plastically deformed such that the vertex side of the isosceles triangle section is moved in the circumferential direction, to be deformed to a disk-like shape. The deformation is uniformly performed. Accordingly, the cylindrical apex 7 is formed in a disk-like shape, and the inner surface of the annular apex 7 is fitted around the outer peripheral surface of the bead ring 69, to be joined thereto.

After that, the product obtained by assembly of the apex 7 and the bead ring 69 is carried out by the removal or carrying out apparatus 4, to be placed on the carrier 74.

In addition, the present invention may be carried out in other forms without departing from the spirit and the essential characteristics of the present invention. The preferred embodiment described in the specification is illustrative and not restrictive. The scope of the present invention is defined by the appended claims, and all changes that fall within the meaning of the claims are intended to be embraced by the present invention.

## Claims

1. A method of automatically assembling a bead apex comprising forming a strip apex (7) having a triangular section with one short side and two long sides and a specified length between leading and rear longitudinal ends into a cylindrical body such that the said long sides are the inner and outer peripheral surfaces respectively, and joining both the longitudinal ends of the said strip apex (7), forming said cylindrical body into a disk-like shape such that said short side becomes the inner peripheral surface and said long sides become the axial end surfaces, and joining the inner peripheral surface of said disk-like apex (7) to the outer peripheral surface of a bead ring (69), characterised by at the start of forming the cylindrical body sticking needles (45) into the leading end of the strip apex (7) by use of a disk roller (32) pressing the strip apex (7) onto said needles (45) so as to firmly grip the strip apex (45).

2. A method of automatically assembling a bead apex according to claim 1, wherein prior to said cylindrical body formation process the strip apex (7) is supplied wound in a roll shape, conveyed in the longitudinal direction, and cut to a specified length, characterised in that the cutting process comprises cutting said strip apex (7) perpendicular to the longitudinal direction and to be tilted at 45 degrees in the thickness direction.

3. A method of automatically assembling a bead apex according to claim 1 or 2, characterised in that the cylindrical body formation process comprises the step of winding said strip apex (7) around the cylindrical outer peripheral surface of a former (35) including a plurality of segments (41) annularly disposed, such that one of said long sides becomes the inner peripheral surface, and said disk formation process comprises raising said segments (41) radially outwardly, such that said short side becomes the inner peripheral surface.

4. A method of automatically assembling a bead apex according to claim 1, 2 or 3, characterised in that the bead ring joining process includes positioning the bead ring (69) on the side portion of said former (35) so as to be concentric with said former (35), prior to said disk formation process, and the bead ring joining process comprises the step of externally fitting the inner peripheral surface of said disk-like apex (7) around the outer peripheral surface of said bead ring (69) disposed on the side of said former (35) by carrying out said disk formation process.

5. An apparatus for automatically assembling a bead apex comprising a cylindrical body formation means (2a) for forming a strip apex (7) having a triangular section with one short side and two long sides and a specified length between leading and rear longitudinal ends into a cylindrical body such that said long sides become the inner and outer peripheral surfaces, and a means for joining both longitudinal ends of the strip apex (7), a means (2b) for farming said cylindrical body into a disk-like shape such that said short side becomes the inner peripheral surface and said long sides become the axial end surfaces, and a means (2c) for joining the inner peripheral surface of said disk-like apex (7) to the outer peripheral surface of a bead ring (69), characterised in that the cylindrical body formation means (2a) includes at one circumferential position needles (45) which project radially outwardly of the cylindrical outer peripheral surface for sticking the leading end of said apex (7).

6. An apparatus for automatically assembling a bead apex according to claim 5, characterised in that the cylindrical body formation means (2a) further includes an apex supply apparatus (1) for supplying said strip apex (7), said apex supply apparatus (1) comprising a means (6) for unwinding said strip apex (7) supplied wound in a roll shape, a means (8) for conveying said unwound strip apex (97) in the longitudinal direction, and a means (27) for cutting said strip apex (7) in a specified length, wherein said cutting means (27) cuts said strip apex (7) so as to be perpendicular to the longitudinal direction and tilted at 45 degrees in the thickness direction.

7. An apparatus for automatically assembling a bead apex according to claim 5 or 6, characterised in that the cylindrical body formation means (2a) includes a former (35) comprising a rotatingly driven wheel (38) and a plurality of segments (41) annularly disposed around the outer peripheral portion of said wheel (38), the peripheral surface of each of said segments (41) being formed in a cylindrical surface for winding said strip apex (7) therearound, and said disk formation means (2b) includes turning shafts (40) for pivotably supporting said segments (41) of said former (35) on said wheel (38), and a segment turning unit for simultaneously turning said segments (41) around said turning shafts (40), said turning shafts (40) being disposed on the tangential lines of the same circle around said wheel (38), and said turning shafts (40) being disposed on the short side of said apex (7) wound around the outer peripheral surface of said segments (41).

8. An apparatus for automatically assembling a bead apex according to claim 7, characterised in that said segment turning unit is disposed in parallel to said wheel (38), and which comprises a slider (44) capable of being close to and apart from said wheel (38) and links (43) for connecting said slider (44) to said segments (41).

9. An apparatus for automatically assembling a bead apex according to claim 5, 6, 7 or 8, characterised in that the bead ring joining means (2c) comprises said disk formation means (2b) and a bead ring clamp unit (51) for disposing said bead ring (69) on the side of said wheel (38) so as to be concentric with said wheel (38).

10. An apparatus for automatically assembling a bead apex according to claim 5, 6, 7, 8 or 9, characterised by a bead ring stock unit (50) for holding a plurality of said bead rings (69) and a transfer unit (52) for taking out said bead rings (69) one by one from said stock unit (50) and for supplying each of said bead rings (69) to said clamp unit (51).

11. An apparatus for automatically assembling a bead apex according to claim 6, 7, 8, 9 or 10, characterised in that the apex supply apparatus (1) includes a reforming unit (17) comprising a guide member (18) for guiding the short side surface of said strip apex 7 on the conveying surface and a forcible drive roller (19) for conveying said strip apex (7) at a speed larger than the conveying speed on the opposed side to said guide member (18).

12. An apparatus for automatically assembling a bead apex according to claim 6, 7, 8, 9 or 10 characterised in that the apex supply apparatus (1) includes a positioning unit (28) comprising a positioning guide member (29) for guiding the short side surface of said strip apex (7) when said strip apex (7) is supplied to said cylindrical body formation means (2a), and a V-shaped guide member (30) for pressing two long side surfaces of said strip apex (7) on said positioning guide member (29) side when said strip apex (7) is supplied to said cylindrical body formation means (2a).

13. An apparatus for automatically assembling a bead apex according to any of claims 7 to 12, characterised in that the cylindrical body formation means (2a) includes a joint unit (46) for press-welding the end portions of said apex (7) wound around the outer peripheral surface of said segments (41) to each other.

## Patentansprüche

1. Verfahren zum automatischen Aufbauen eines Wulstkernreiters, umfassend, daß ein Streifenkernreiter (7), der einen dreieckigen Querschnitt mit einer kurzen Seite und zwei langen Seiten und eine spezifizierte Länge zwischen vorderen und hinteren Längsenden aufweist, zu einem zylindrischen Körper geformt wird, so daß die langen Seiten jeweils die Innen- bzw. Außenumfangsflächen sind, und daß die beiden Längsenden des Streifenkernreiters (7) verbunden werden, daß der zylindrische Körper zu einer scheibenartige Gestalt geformt wird, so daß die kurze Seite die Innenumfangsfläche wird und die langen Seiten die axialen Endflächen werden, und daß die Innenumfangsfläche des scheibenartigen Kernreiters (7) mit der Außenumfangsfläche eines Wulstrings (69) verbunden wird,
dadurch gekennzeichnet,
daß beim Start der Formung des zylindrischen Körpers Nadeln (45) in das vordere Ende des Streifenkernreiters (7) unter Verwendung einer Scheibenwalze (32) gesteckt werden, die den Streifenkernreiter (7) auf die Nadeln (45) drückt, so daß der Streifenkernreiter (45) fest gegriffen wird.

2. Verfahren zum automatischen Aufbauen eines Wulstkernreiters nach Anspruch 1, wobei vor dem Prozeß der Formung des zylindrischen Körpers der Streifenkernreiter (7) in einer Rollengestalt aufgewickelt zugeführt, in der Längsrichtung befördert und auf eine spezifizierte Länge geschnitten wird,
dadurch gekennzeichnet,
daß der Schneideprozeß umfaßt, daß der Streifenkernreiter (7) senkrecht zur Längsrichtung und so, daß er unter 45 Grad in Richtung der Dicke abgeschrägt ist, geschnitten wird.

3. Verfahren zum automatischen Aufbauen eines Wulstkernreiters nach Anspruch 1 oder 2,
dadurch gekennzeichnet,
daß der Prozeß der Formung des zylindrischen Körpers den Schritt umfaßt, daß der Streifenkernreiter (7) um die zylindrische Außenumfangsfläche einer Formungseinrichtung (35), die eine Vielzahl von ringförmig angeordneten Segmenten (41) umfaßt, gewickelt wird, so daß eine der langen Seiten die Innenumfangsfläche wird, und daß der Scheibenformungsprozeß umfaßt, daß die Segmente (41) radial nach außen angehoben werden, so daß die kurze Seite die Innenumfangsfläche wird.

4. Verfahren zum automatischen Aufbauen eines Wulstkernreiters nach Anspruch 1, 2 oder 3,
dadurch gekennzeichnet,
daß der Wulstringverbindungsprozeß umfaßt, daß vor dem Scheibenformungsprozeß der Wulstring (69) an dem Seitenteil der Formungseinrichtung (35) positioniert wird, so daß er konzentrisch mit der Formungseinrichtung (35) ist, und daß der Wulstringverbindungsprozeß den Schritt umfaßt, daß die Innenumfangsfläche des scheibenartigen Kernreiters (7) um die Außenumfangsfläche des auf der Seite der Formungseinrichtung (35) angeordneten Wulstrings (69) herum außen angepaßt wird, indem der Scheibenformungsprozeß ausgeführt wird.

5. Vorrichtung zum automatischen Aufbauen eines Wulstkernreiters, umfassend: ein Zylinderkörperformungsmittel (2a), um einen Streifenkernreiter (7), der einen dreieckigen Querschnitt mit einer kurzen Seite und zwei langen Seiten und eine spezifizierte Länge zwischen vorderen und hinteren Längsenden aufweist, zu einem zylindrischen Körper zu formen, so daß die langen Seiten die Innen- und Außenumfangsflächen werden, und ein Mittel, um beide Längsenden des Streifenkernreiters (7) zu verbinden, ein Mittel (2b), um den zylindrischen Körper zu einer scheibenartigen Gestalt zu formen, so daß die kurze Seite die Innenumfangsfläche wird und die langen Seiten die axialen Endflächen werden, und ein Mittel (2c), um die Innenumfangsfläche des scheibenartigen Kernreiters (7) mit der Außenumfangsfläche eines Wulstrings (69) zu verbinden,
dadurch gekennzeichnet,
daß das Zylinderkörperformungsmittel (2a) in einer Umfangsposition Nadeln (45) umfaßt, die von der zylindrischen Außenumfangsfläche radial nach außen vorspringen, um das vordere Ende des Kernreiters (7) zu stecken.

6. Vorrichtung zum automatischen Aufbauen eines Wulstkernreiters nach Anspruch 5,
dadurch gekennzeichnet,
daß das Zylinderkörperformungsmittel (2a) ferner umfaßt:
eine Kernreiterzufuhrvorrichtung (1), um den Streifenkernreiter (7) zuzuführen, wobei die Kernreiterzufuhrvorrichtung (1) ein Mittel (6) umfaßt, um den Kernreiterstreifen (7), der in einer Rollengestalt aufgewickelt zugeführt wird, abzuwickeln, ein Mittel (8) umfaßt, um den abgewickelten Streifenkernreiter (97) in der Längsrichtung zu befördern, und ein Mittel (27) umfaßt, um den Streifenkernreiter (7) in einer spezifizierten Länge zu schneiden, wobei das Schneidemittel (27) den Streifenkernreiter (7) so schneidet, daß er senkrecht zur Längsrichtung steht und unter 45 Grad in Richtung der Dicke abgeschrägt ist.

7. Vorrichtung zum automatischen Aufbauen eines Wulstkernreiters nach Anspruch 5 oder 6,
dadurch gekennzeichnet,
daß das Zylinderkörperformungsmittel (2a) eine Formungseinrichtung (35) umfaßt, die ein drehbar angetriebenes Rad (38) und eine Vielzahl von Segmenten (41) umfaßt, die ringförmig um den äußeren Umfangsteil des Rades (38) angeordnet sind, wobei die Umfangsfläche von jedem der Segmente (41) als eine zylindrische Fläche geformt ist, um den Streifenkernreiter (7) um diese zu wickeln, und daß das Scheibenformungsmittel (2b) Drehwellen (40) umfaßt, um die Segmente (41) der Formungseinrichtung (35) auf dem Rad (38) schwenkbar zu tragen, und eine Segmentdreheinheit umfaßt, um die Segmente (41) gleichzeitig um die Drehwellen (40) herum zu drehen, umfaßt, wobei die Drehwellen (40) auf den tangentialen Linien des gleichen Kreises um das Rad (38) herum angeordnet sind und die Drehwellen (40) auf der kurzen Seite des Kernreiters (7) angeordnet sind, der um die Außenumfangsfläche der Segmente (41) herumgewickelt ist.

8. Vorrichtung zum automatischen Aufbauen eines Wulstkernreiters nach Anspruch 7,
dadurch gekennzeichnet,
daß die Segmentdreheinheit parallel zu dem Rad (38) angeordnet ist, und daß sie einen Schieber (44) umfaßt, der in der Lage ist, sich nahe bei und fern von dem Rad (38) zu befinden, und daß sie Verbindungen umfaßt (43), um den Schieber (44) mit den Segmenten (41) zu verbinden.

9. Vorrichtung zum automatischen Aufbauen eines Wulstkernreiters nach einem der Ansprüche 5, 6, 7 oder 8,
dadurch gekennzeichnet,
daß das Wulstringverbindungsmittel (2c) das Scheibenformungsmittel (2b) und eine Wulstringklemmeinheit (51) umfaßt, um den Wulstring (69) auf der Seite des Rades (38) anzuordnen, so daß er konzentrisch mit dem Rad (38) ist.

10. Vorrichtung zum automatischen Aufbauen eines Wulstkernreiters nach einem der Ansprüche 5, 6, 7, 8 oder 9, gekennzeichnet durch eine Wulstringstapeleinheit (50), um eine Vielzahl der Wulstringe (69) zu halten, und eine Transporteinheit (52), um die Wulstringe (69) einzeln aus der Stapeleinheit (50) herauszunehmen und um jeden der Wulstringe (69) der Klemmeinheit (51) zuzuführen.

11. Vorrichtung zum automatischen Aufbauen eines Wulstkernreiters nach einem der Ansprüche 6, 7, 8, 9 oder 10,
dadurch gekennzeichnet,
daß die Kernreiterzufuhrvorrichtung (1) eine Umformungseinheit (17) umfaßt, die ein Führungselement (18) umfaßt, um die Oberfläche der kurzen Seite des Streifenkernreiters (7) auf der Förderfläche zu führen, und die auf der entgegengesetzten Seite von dem Führungselement (18) eine Zwangsantriebswalze (19) umfaßt, um den Streifenkernreiter (7) mit einer größeren Geschwindigkeit als die Fördergeschwindigkeit zu befördern.

12. Vorrichtung zum automatischen Aufbauen eines Wulstkernreiters nach einem der Ansprüche 6, 7, 8, 9 oder 10,
dadurch gekennzeichnet,
daß die Kernreiterzufuhrvorrichtung (1) eine Positioniereinheit (28) umfaßt, die ein Positionierführungselement (29) umfaßt, um die Oberfläche der kurzen Seite des Streifenkernreiters (7) zu führen, wenn der Streifenkernreiter (7) dem Zylinderkörperformungsmittel (2a) zugeführt wird, und die ein V-förmiges Führungselement (30) umfaßt, um die Oberflächen der zwei langen Seiten des Streifenkernreiters (7) auf das Positionierführungselement (29) zu drücken, wenn der Streifenkernreiter (7) dem Zylinderkörperformungsmittel (2a) zugeführt wird.

13. Vorrichtung zum automatischen Aufbauen eines Wulstkernreiters nach einem der Ansprüche 7 bis 12,
dadurch gekennzeichnet,
daß das Zylinderkörperformungsmittel (2a) eine Verbindungseinheit (46) umfaßt, um die Endteile des Kernreiters (7), der um die Außenumfangsfläche der Segmente (41) herumgewickelt ist, miteinander über Preßschweißen zu verbinden.

## Revendications

1. Procédé d'assemblage automatique d'une pointe de bourrage de talon, comprenant la mise d'une pointe de bourrage (7) en forme de bande de section triangulaire ayant un petit côté et deux grands côtés et une longueur spécifiée entre des extrémités longitudinales avant et arrière, et une configuration cylindrique telle que les grands côtés forment les surfaces périphériques interne et externe, et le raccordement des deux extrémités longitudinales de la pointe de bourrage (7) en forme de bande, la mise du corps cylindrique à une configuration analogue à un disque afin que le petit côté devienne la surface périphérique interne et les grands côtés des surfaces d'extrémité axiale, et le raccordement de la surface périphérique interne de la pointe de bourrage (7) en forme de disque à la surface périphérique externe d'une tringle (69), caractérisé en ce que, au début de la mise en forme du corps cylindrique, il comprend l'enfoncement d'aiguilles (45) à l'extrémité avant de la pointe de bourrage (7) en forme de bande à l'aide d'un rouleau (32) à disque qui repousse la pointe de bourrage (7) en forme de bande sur les aiguilles (45) afin que la pointe de bourrage (45) en forme de bande soit fermement serrée.

2. Procédé d'assemblage automatique d'une pointe de bourrage de talon selon la revendication 1, dans lequel, avant l'opération de mise sous forme d'un corps cylindrique, la pointe de bourrage (7) sous forme d'une bande est transmise alors qu'elle est enroulée sur un rouleau, transportée dans la direction longitudinale, et coupée à une longueur spécifiée, caractérisé en ce que l'opération de coupe comprend la coupe de la pointe de bourrage (7) en forme de bande perpendiculairement à la direction longitudinale et en direction inclinée à 45° dans la direction de l'épaisseur.

3. Procédé d'assemblage automatique d'une pointe de bourrage de talon selon la revendication 1 ou 2, caractérisé en ce que l'opération de mise sous forme d'un corps cylindrique comprend une étape d'enroulement de la pointe de bourrage (7) en forme de bande autour de la surface périphérique externe cylindrique d'un organe formateur (35) qui comprend plusieurs segments (41) disposés annulairement, si bien que l'un des grands côtés devient la surface périphérique interne, et l'opération de mise sous forme d'un disque comprend le soulèvement des segments (41) en direction radiale vers l'extérieur, afin que le petit côté devienne la surface périphérique interne.

4. Procédé d'assemblage automatique d'une pointe de bourrage de talon selon la revendication 1, 2 ou 3, caractérisé en ce que l'opération de raccordement de tringle comprend le positionnement de la tringle (69) sur la partie latérale de l'organe formateur (35) afin qu'elle soit concentrique à l'organe formateur (35), avant l'opération de mise sous forme d'un disque, et l'opération de raccordement de tringle comprend une étape d'ajustement externe de la surface périphérique interne de la pointe de bourrage (7) en forme de disque autour de la surface périphérique externe de la tringle (69) placée à côté de l'organe formateur (35) par exécution de l'opération de mise sous forme d'un disque.

5. Appareil d'assemblage automatique d'une pointe de bourrage de talon, comprenant un dispositif (2a) de mise sous forme d'un corps cylindrique destiné à mettre une pointe de bourrage (7) en forme de bande, ayant une section triangulaire possédant un petit côté et deux grands côtés et une longueur spécifiée entre les extrémités longitudinales avant et arrière, à la forme d'un corps cylindrique tel que les grands côtés deviennent les surfaces périphériques interne et externe, et un dispositif de raccordement des deux extrémités longitudinales de la pointe de bourrage (7) en forme de bande, un dispositif (2b) destiné à mettre le corps cylindrique à une configuration analogue à un disque afin que le petit côté devienne la surface périphérique interne et les grands côtés les surfaces d'extrémité axiale, et un dispositif (2c) de raccordement de la surface périphérique interne de la pointe de bourrage (7) analogue à un disque à la surface périphérique externe d'une tringle (69), caractérisé en ce que le dispositif (2a) de mise sous forme d'un corps cylindrique comprend des aiguilles (45) de positionnement circonférentiel qui dépassent radialement à l'extérieur de la surface périphérique externe cylindrique afin qu'elles s'enfoncent à l'extrémité avant de la pointe de bourrage (7).

6. Appareil d'assemblage automatique d'une pointe de bourrage de talon selon la revendication 5, caractérisé en ce que le dispositif (2a) de mise sous forme d'un corps cylindrique comprend en outre un appareil (1) de transmission de pointe de bourrage destiné à transmettre la pointe de bourrage (7) en forme de bande, l'appareil (1) de transmission de pointe de bourrage comprenant un dispositif (6) de déroulement de la pointe de bourrage (7) en forme de bande transmise enroulée sur un rouleau, un dispositif (8) de transport de la pointe de bourrage (7) en forme de bande qui est déroulée dans la direction longitudinale, et un dispositif (27) de coupe de la pointe de bourrage (7) en forme de bande à une longueur spécifiée, dans lequel le dispositif de coupe (27) coupe la pointe de bourrage (7) en forme de bande en direction perpendiculaire à la direction longitudinale et inclinée de 45° dans la direction de l'épaisseur.

7. Appareil d'assemblage automatique d'une pointe de bourrage de talon selon la revendication 5 ou 6, caractérisé en ce que le dispositif (2a) de mise sous forme d'un corps cylindrique comporte un organe formateur (35) qui comprend une roue (38) entraînée en rotation et plusieurs segments (41) disposés annulairement autour de la partie périphérique externe de la roue (38), la surface périphérique de chacun des segments (41) étant mise sous forme d'une surface cylindrique pour l'enroulement autour de celle-ci de la pointe de bourrage (7) en forme de bande, et le dispositif (2b) de mise sous forme de disque comprend des arbres rotatifs (40) destinés à supporter les segments (41) de l'organe formateur (35) afin qu'ils puissent pivoter sur la roue (38), et une unité de rotation de segment destinée à faire tourner simultanément les segments (41) autour des arbres rotatifs (40) les arbres rotatifs (40) étant disposés sur les tangentes au cercle formé autour de la roue (38), et les arbres rotatifs (40) étant placés sur le petit côté de la pointe de bourrage (7) enroulée autour de la surface périphérique externe des segments (41).

8. Appareil d'assemblage automatique d'une pointe de bourrage de talon selon la revendication 7, caractérisé en ce que l'unité destinée à faire tourner les segments est disposée parallèlement à la roue (38), et comporte un coulisseau (44) qui peut être rapproché et écarté de la roue (38), et des bielles (43) de raccordement du coulisseau (44) aux segments (41).

9. Appareil d'assemblage automatique d'une pointe de bourrage de talon selon la revendication 5, 6, 7 ou 8, caractérisé en ce que le dispositif (2c) de raccordement de tringle comprend un dispositif (2b) de mise sous forme de disque et une unité (51) de serrage de tringle destinée à disposer la tringle (69) sur le côté de la roue (38) afin qu'elle soit concentrique à la roue (38).

10. Appareil d'assemblage automatique d'une pointe de bourrage de talon selon la revendication 5, 6, 7, 8 ou 9, caractérisé par une unité (50) à tringles destinée à supporter plusieurs tringles (69) et une unité (52) de transfert destinée à retirer les tringles (69) une à une de l'unité (50) à tringles et à transmettre chacune des tringles (69) à l'unité de serrage (51).

11. Appareil d'assemblage automatique d'une pointe de bourrage de talon selon la revendication 6, 7, 8, 9 ou 10, caractérisé en ce que l'appareil (1) de transmission de pointe de bourrage comporte une unité (17) de remise en forme qui comporte un organe (18) de guidage de la surface du petit côté de la pointe de bourrage (7) en forme de bande sur la surface de transport et un rouleau d'entraînement à force (19) destiné à transporter la pointe de bourrage (7) en forme de bande à une vitesse supérieure à la vitesse de transport du côté opposé de l'organe de guidage (18).

12. Appareil d'assemblage automatique d'une pointe de bourrage de talon selon la revendication 6, 7, 8, 9 ou 10, caractérisé en ce que l'appareil (1) de transmission de pointe de bourrage comporte une unité (28) de positionnement qui comprend un organe (29) de guidage de positionnement destiné à guider la surface du petit côté de la pointe de bourrage (7) en forme de bande lorsque cette pointe de bourrage (7) en forme de bande est transmise au dispositif (2a) de mise sous forme d'un corps cylindrique, et un organe (30) de guidage en V destiné à repousser deux surfaces des grands côtés de la pointe de bourrage (7) en forme de bande du côté de l'organe (29) de guidage de positionnement lorsque la pointe de bourrage (7) en forme de bande est transmise au dispositif (2a) de mise sous forme d'un corps cylindrique.

13. Appareil d'assemblage automatique d'une pointe de bourrage de talon selon l'une quelconque des revendications 7 à 12, caractérisé en ce que le dispositif (2a) de mise sous forme d'un corps cylindrique comprend une unité (46) de raccordement destinée à souder sous pression l'une sur l'autre les parties d'extrémité de la pointe de bourrage (7) enroulée à la surface périphérique externe des segments (41).
